# EUROPÄISCHE PATENTSCHRIFT

(11) **EP 2 965 603 B1**
(45) Veröffentlichungstag und Bekanntmachung des Hinweises auf die Patenterteilung: **21.08.2019**
(21) Anmeldenummer: 15401065.6
(22) Anmeldetag: 06.07.2015
(51) Int. Cl.: A01B 71/04, A01B 63/32

(54) **LANDWIRTSCHAFTLICHES GERÄT**
AGRICULTURAL DEVICE
APPAREIL AGRICOLE

(30) Priorität: 08.07.2014 DE 102014109503
(43) Veröffentlichungstag der Anmeldung: 13.01.2016
(73) Patentinhaber: Amazonen-Werke H. Dreyer GmbH & Co. KG, 49205 Hasbergen (DE)
(72) Erfinder: Andrich, Robert, 04177 Leipzig (DE)

(56) Entgegenhaltungen:
- DE-B4- 10 066 183
- DE-U1-202007 004 389
- FR-A1- 2 842 699

## Beschreibung

Die Erfindung betrifft ein landwirtschaftliches Gerät gemäß des Oberbegriffes des Patentanspruches 1.

Ein derartiges landwirtschaftliches Gerät ist in der DE 100 66 183 B4 und der DE 20 2007 004389 U1 beschrieben. Dieses landwirtschaftliche Gerät ist als Bodenbearbeitungsgerät ausgebildet. Es weist zumindest einen an einem Tragrahmen angeordneten und Bodenbarbeitungswerkzeuge tragenden Trägerbalken auf. Die Bodenbarbeitungswerkzeuge sind mittels Tragarme aufweisenden Halterungen an dem Trägerbalken gefestigt. Der Trägerbalken ist mittels zumindest zweier beabstandet zueinander angeordneter Drehlager an dem Tragrahmen angeordnet. Der Trägerbalken ist in den Drehlagern um seine Längsachse begrenzt verdrehbar. Das jeweilige Drehlager weist einen an dem Trägerbalken befestigten Innenlagerring und einem auf dem Innenlagerring verdrehbar gelagerten und an dem Tragrahmen angeordneten Außenlagerring auf. Dem jeweiligen Drehlager sind den Außenlagerring zum Innenlagerring in axialer Richtung zueinander fixierende Sicherungselemente zugeordnet. Die Sicherungselemente sind jeweils mittels Befestigungselementen mit dem Innenlagerring in lösbarer Weise verbunden. Bei den bekannten Ausgestaltungen sind die Sicherungselemente in der Nähe des Trägerbalkens jeweils mit dem Innenlagerring mittels Schrauben verschraubt. Durch die Verschraubung der Sicherungselementes mit dem Innenlagerring in der Nähe des Trägerbalkens weist das Drehlager aufgrund der über die Sicherungselemente hinaus stehenden Schraubenköpfe und Schraubenmuttern eine relativ große Breite auf. Außerdem sind die Schraubenköpfe und Schraubenmuttern nur schwer zugänglich, wenn sie sich zwischen den eng beieinander anliegenden Halterungen der Tragarme für die Bodenbearbeitungswerkzeuge befinden. Um eine ausreichende Zugänglichkeit zu erhalten, können die Halterungen nicht die optimal mögliche Breite aufweisen. Auch eine erforderliche Austauschbarkeit der Lagerelemente ist bei deren Verschleiß oder sonstiger Beschädigung nicht in einfacher Weise gegeben, weil die Schrauben nur schwer zugänglich sind, so dass eine Demontage der Halterungen für die Tragarme in derartigen Fällen erforderlich ist.

Ein weiteres, vergleichbares landwirtschaftliches Gerät ist in der FR 2 842 699 A1 beschrieben, wobei dem jeweiligen Drehlager nur ein einziges Sicherungselement zugeordnet ist.

Der Erfindung liegt die Aufgabe zu Grunde, ein verbessert ausgestaltetes Drehlager mit einer leichten Zugänglichkeit der Befestigungselemente für die Sicherungselemente zu schaffen.

Diese Aufgabe wird erfindungsgemäß dadurch gelöst, dass das in lösbarer Weise befestigte Sicherungselement mit den Befestigungselementen an dem Außenlagerring befestigt ist.

Infolge dieser Maßnahme wird die Grundvoraussetzung für sehr schmal bauende Drehlager geschaffen, die darüber hinaus den Vorteil bieten, dass eine gute Zugänglichkeit für die Befestigungselemente für die Sicherungselemente auch bei engen Bauverhältnisse durch eng beieinander liegenden Halterungen für die Tragarme der Bodenbearbeitungswerkzeuge gegeben ist. Somit wird die Grundvoraussetzung dafür geschaffen, dass zum Wechseln der Lagerringe, insbesondere des Außenlagerringes, die Befestigungselemente für die Sicherungselementes ohne zusätzlichem sonstigen Montageaufwand gelöst und entfernt werden können. In der Erfindung sind die auf den beiden Seiten der Lageringe angeordneten Sicherungselemente über die Befestigungselemente mit dem Außenlagering entsprechend verbunden. Die Lösung der Aufgabe erfolgt erfindungsgemäß durch die Merkmale des unabhängigen Anspruches 1. Vorteilhafte Ausgestaltungen der Erfindung sind in den Unteransprüchen 2-7 angegeben.

Um in einfacher Weise die Sicherungselemente von dem Außenlagerring für Wartungsarbeiten entfernen zu können, ist vorgesehen, dass beide der einem Drehlager zugeordneten Sicherungselemente in lösbarer Weise befestigte Sicherungselemente mit den Befestigungselementen an dem Außenlagerring befestigt sind.

Um den Außenlagerring ohne eine aufwändige Demontage der Halterungen von dem Trägerbalken von dem Drehlager zum Zwecke des Auswechseln und/oder der Wartung abnehmen zu können und wieder einsetzen zu können, ist vorgesehen, dass der Außenlagerring einen Ausschnitt aufweist. Hierbei weist der Ausschnitt eine derartige Größe auf, dass er zumindest nach einem seitlichen Verschieben auf den Trägerbalken aufgesetzt oder von ihm abgezogen werden kann. Somit kann der Außenlagerring einfach gewechselt werden.

In einfacher Weise ist zur erfindungsgemäßen Ausgestaltung des Außenlagerringes vorgesehen, dass der Außenlagerring C-förmig ausgebildet ist.

Damit in einfacher Weise eventuell in die Lagerstelle des Drehlagers zwischen dem Innen- und Außenlagerring eindringende Verschmutzungen leicht wieder ausgelangen können, ist vorgesehen, dass der Ausschnitt sich auf der Unterseite des Drehlagers befindet. Somit können mögliche Verunreinigungen einfach wieder aus der Lagestelle heraus gelangen.

Um eine ausreichende Steifigkeit des durch den Ausschnitt geöffneten Außenlagerringes in einfacher Weise zu erreichen, ist vorgesehen, dass jeweils in der Nähe des Ausschnittes ein den Außenlagerring mit den Sicherungselementen verbindendes Befestigungselement angeordnet ist. Somit überbrücken die Sicherungselemente den Ausschnitt in dem Außenlagerring und schließen ihn wieder. Der durch den Ausschnitt unterbrochene Außenlagerring wird durch die vorzugsweise geschlossen ausgebildeten Sicherungselemente in Verbindung mit den Befestigungselementen entsprechend geschlossen und so verstärkt ausgestaltet.

Weitere Einzelheiten der Erfindung sind der Beispielsbeschreibung zu entnehmen. Die Zeichnungen zeigen
- Fig.1: das als Scheibenegge ausgebildete landwirtschaftliche Gerät in Arbeitsstellung und in perspektivischer Ansicht,
- Fig.2: die Lagerung der Trägerbalken am Tragrahmen des Scheibengerätes in Teilansicht des Gerätes, in vergrößertem Maßstab und perspektivischer Ansicht gemäß dem Stand der Technik,
- Fig.3: das Lagerelement gemäß Fig. 2 in perspektivischer Ansicht in Explosionsdarstellung,
- Fig.4: die erfindungsgemäße Lagerung der Trägerbalken am Tragrahmen des Scheibengerätes gemäß Fig.1 in Teilansicht des Gerätes, in vergrößertem Maßstab und perspektivischer Ansicht,
- Fig.5: das erfindungsgemäße Lagerelement der Lagerung der Trägerbalken am Tragrahmen des Scheibengerätes in perspektivischer Ansicht und vergrößerter Darstellung,
- Fig.6: das erfindungsgemäße Lagerelement gemäß Fig. 5 in perspektivischer Ansicht in Explosionsdarstellung und

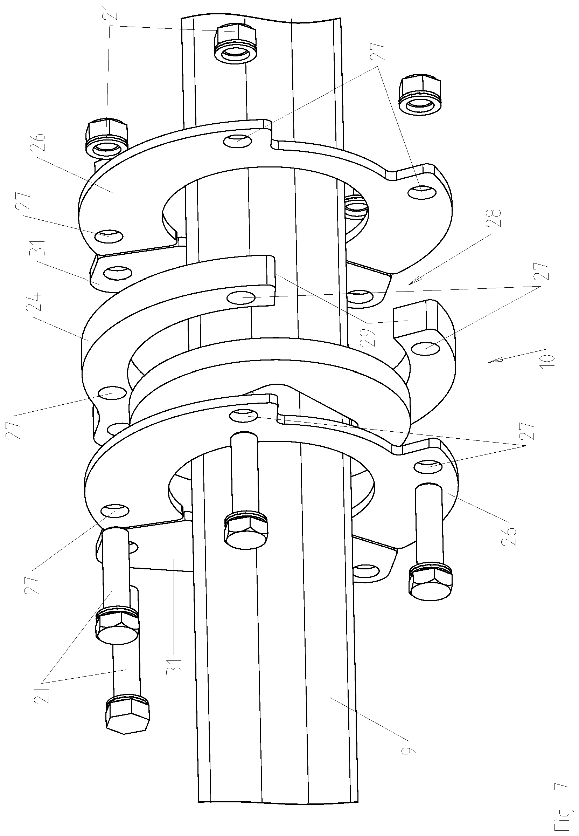

- Fig.7: das erfindungsgemäße Lagerelement gemäß Fig. 5 in einer weiteren perspektivischer Ansicht in Explosionsdarstellung.

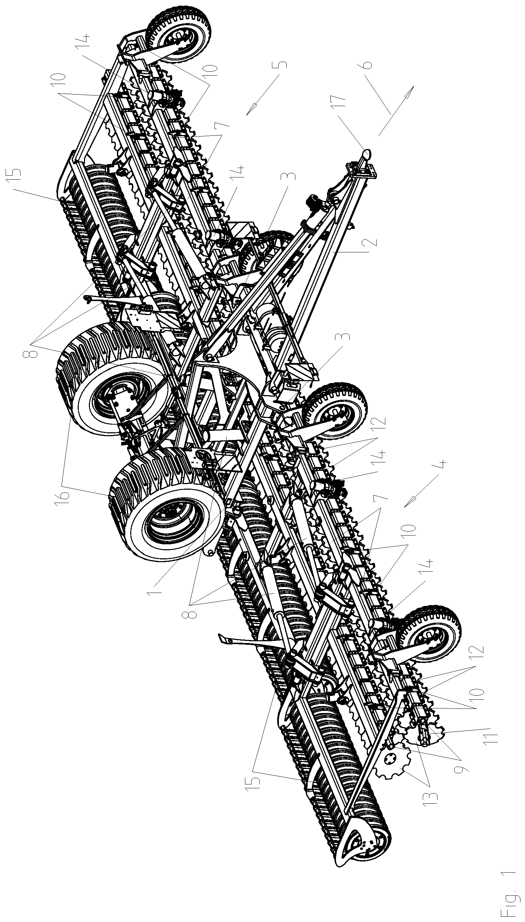

Das als Scheibenegge ausgebildete landwirtschaftliche Gerät weist den Zentralrahmen 1 mit der Zugdeichsel 2 auf. An dem Zentralrahmen 1 sind mittels Gelenken 3 die beiden Seitensektionen 4 und 5 um in Fahrtrichtung 6 verlaufende Schwenkachsen aus der in Fig.1 dargestellten Arbeitsstellung in die nicht dargestellte Transportstellung schwenkbar angeordnet. Die Seitensektionen 4 und 5 weisen die Tragrahmen 7 auf. Zwischen dem Tragrahmen 7 einerseits und dem Zentralrahmen 1 sind andererseits die Hydraulikzylinder 8 zum Verschwenken der Seitensektionen 4 und 5 aus der Arbeitsposition gemäß Fig.1 in die nicht dargestellte Transportposition angeordnet. Die Hydraulikzylinder 8 sind mittels nicht dargestellter Hydraulikleitungen mit einer Hydraulikanlage, beispielsweise eines als Scheibenegge ausgebildete Bodenbearbeitungsgerätes ziehenden Ackerschlepper verbunden. An in dem Tragrahmen 7 sind zwei hintereinander und zumindest annähernd parallel zueinander angeordnete quer zur Bewegungsrichtung 6 der Scheibenegge verlaufende Trägerbalken 9 mittels der Drehlager 10 angeordnet. An jedem Trägerbalken 9 ist eine Vielzahl von Armen 11 mittels einer so genannten Gummilagerung 12 federnd gelagert angeordnet. Somit ist eine elastische Anordnung und Lagerung 12 der Arme 11 an den Trägerbalken 9 geschaffen. An dem der Gummilagerung 12 entgegengesetzten Ende der Arme 11 sind schräg zur Fahrtrichtung 6 angestellte Scheiben 13 zur Bodenbearbeitung in bekannter und nicht näher dargestellter Weise frei drehbar gelagert. Die Scheiben 13 in der vorderen Querreihe sind entgegengesetzt schräg zu den Scheiben 13 in der hinteren Querreihe angestellt.

Mittels der Drehlager 10 sind die Trägerbalken 9 in den Drehlagern 10 um Ihre Längsachse begrenzt verdrehbar angeordnet. Hierzu sind an den Trägerbalken 9 drehfest mit ihnen verbundene Schwenkhebel angeordnet. Zwischen den Schwenkhebeln und dem Tragrahmen 7 sind hierzu als hydraulische Schwenkzylinder 14 ausgebildete Verstellmittel zum Verdrehen der Trägerbalken 9 in den Drehlagern 10 mit den über die Arme 11 daran angeordneten Bodenbearbeitungswerkzeugen 13 angeordnet.

Hinter den als den Boden lockernden Bodenbearbeitungswerkzeugen ausgebildeten Scheiben 13 sind Walzenelemente 15 mit entsprechenden Tragarmen in höhenverstellbarer Weise gegenüber den Scheiben 13 zum Verdichten des von den Scheiben 13 gelockerten Bodens in bekannter und daher nicht näher dargestellter und erläuternder Weise angeordnet.

Am hinteren Ende des Zentralrahmens 1 ist das mittels zumindest eines Hydraulikzylinders verschwenkbare Fahrwerk 16 angeordnet. In der in Fig.1 dargestellten Arbeitsstellung des Bodenbearbeitungsgerätes ist das Fahrwerk 16 ausgehoben und befindet sich oberhalb des Zentralrahmens 1 in verschwenkter Weise. Dieses Fahrwerk 16 lässt sich, wenn die Scheibenegge in die nicht dargestellte Transportstellung gebracht wird, in eine Position nach hinten schwenken, so dass die Werkzeuge 13 und 15 des Bodenbearbeitungsgerätes vom Boden abgehoben werden und das Gerät mittels des Fahrwerks 16 entsprechend transportiert werden kann. Auf der Vorderseite der Zugdeichsel 2 befindet sich die Zugkupplung 17, mit welcher das Gerät an eine Zugvorrichtung eines nicht gezeigten Ackerschleppers anzukuppeln ist.

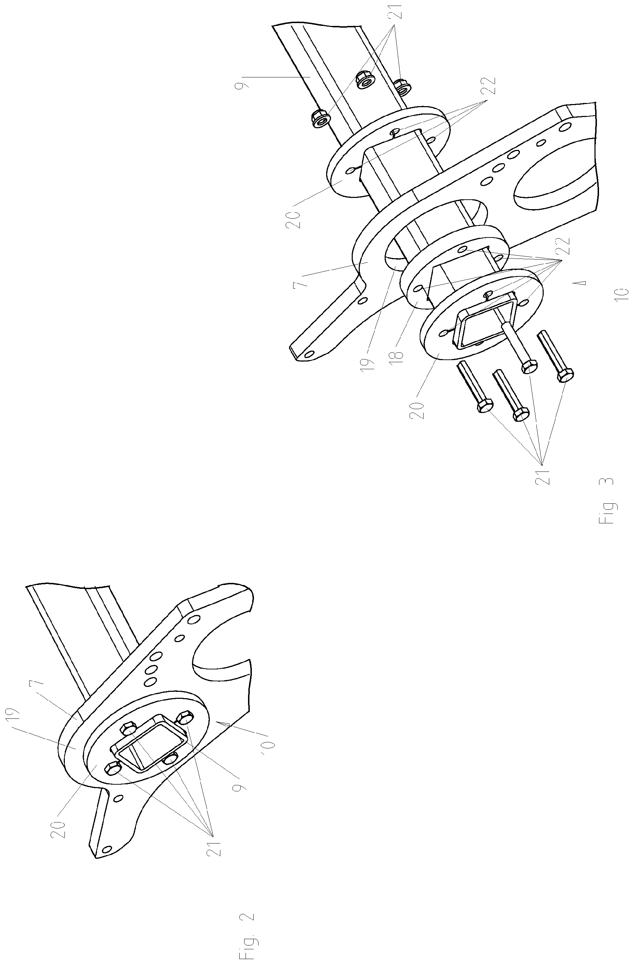

In den Fig. 2 und 3 ist ein Drehlager 10 nach dem Stand der Technik dargestellt. Dieses bekannte jeweilige Drehlager 10 weist einen an dem jeweiligen Trägerbalken 9 drehfest befestigten sowie in axialer Richtung mit dem Trägerbalken 9 unverschiebbar verbundenen Innenlagerring 18 und einen mit dem Innenlagerring 18 in verdrehbar gelagerter Weise zusammenwirkenden und mit dem Tragrahmen 7 verbundenen Außenlagerring 19 auf. Der Außenlagerring 19 kann auch in den Tragrahmen 7, wie im bekannten Ausführungsbeispiel ausgeführt, direkt integriert angeordnet sein. Dem Drehlager 10 ist weiterhin auf jeder Seite ein den Innenlagerring 18 zum Außenlagerring 19 in axialer Richtung zueinander fixierenden Sicherungselementen 20 zugeordnet. Die Sicherungselemente 20 sind hier mit dem Innenlagerring 18 über als Schrauben 21 ausgebildeten Befestigungselementen in lösbarer Weise verbunden. Zum Durchführen der Schrauben 21 durch den Innenlagerring 18 und die Sicherungselemente 20 sind sowohl in dem Innenlagerring 18 wie auch den Sicherungselementen 20 deckungsgleiche als Bohrungen ausgebildete Durchbrüche 22 angebracht, um hierdurch die Schrauben 21 zum Verbinden von Innenlagerring 18 mit den Sicherungselementen 20 hindurch zu führen.

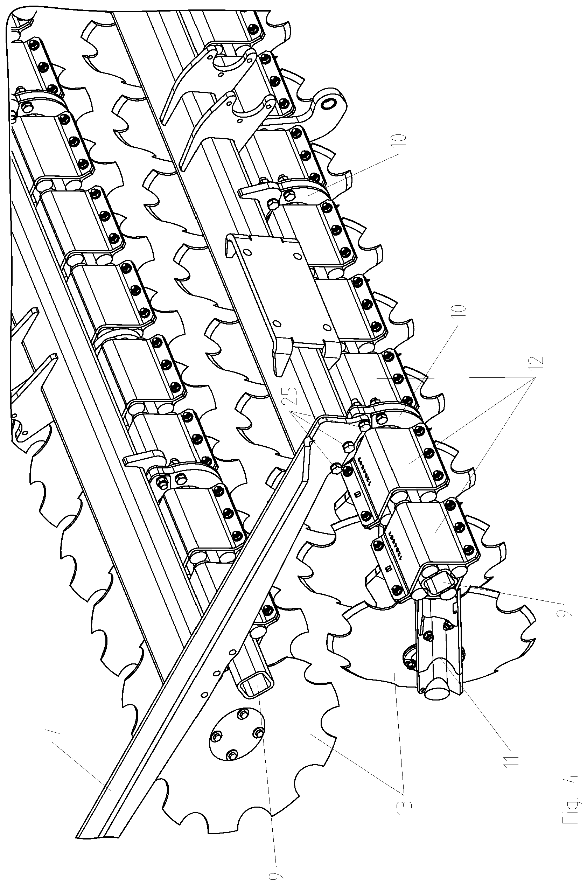

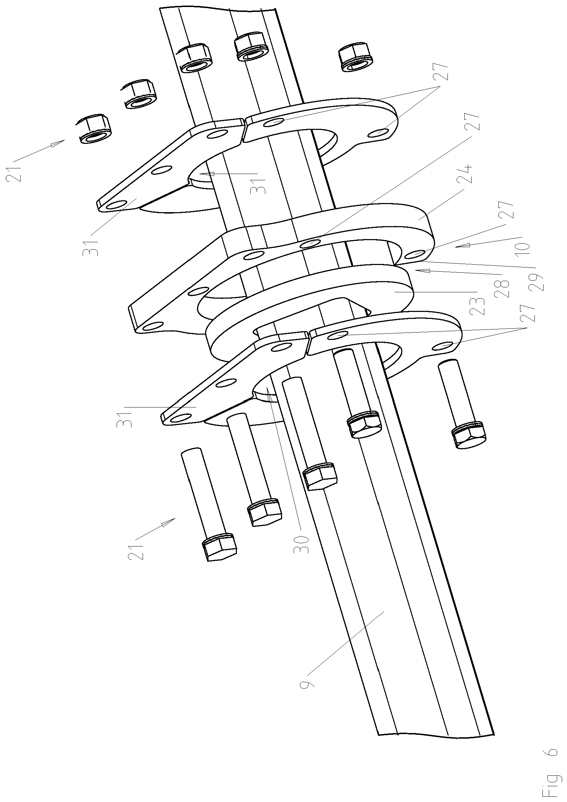

Die Fig.4 bis 6 zeigen ein erfindungsgemäßes Drehlager 10 zur Befestigung der Trägerbalken 9 an dem Tragrahmen 7. Dieses Drehlager 10 weist einen an dem jeweiligen Trägerbalken 9 drehfest befestigten sowie in axialer Richtung mit dem Trägerbalken 9 unverschiebbar verbundenen Innenlagerring 23 und einen mit dem Innenlagerring 23 in verdrehbar gelagerter Weise zusammenwirkenden und an dem Tragrahmen 7 angeordneten Außenlagerring 24 auf. Der Außenlagerring 24 ist mit dem Tragrahmen im Ausführungsbeispiel über eine lösbare Schraubverbindung 25 mit dem Tragrahmen 7 verbunden. Der Außenlagerring 24 kann auch in den Tragrahmen 7 direkt integriert angeordnet sein. Diesem Drehlager 10 ist weiterhin auf jeder Seite ein den Innenlagerring 23 zum Außenlagerring 24 in axialer Richtung zueinander fixierendes Sicherungselement 26 zugeordnet. Die Sicherungselemente 26 sind hier mit dem Außenlagerring 24 über als Schrauben 21 ausgebildeten Befestigungselementen in lösbarer Weise verbunden. Zum Durchführen der Schrauben 21 durch den Außenlagering 24 und den scheibenartigen Sicherungselemente 26 sind sowohl in dem Außenlagering 24 wie auch den Sicherungselementen 26 deckungsgleiche als Bohrungen ausgebildete Durchbrüche 27 angebracht, um hierdurch die Schrauben 21 zum Verbinden von Außenlagerring 24 mit den Sicherungselementen 26 hindurch zu führen. Somit sind beide der einem erfindungsgemäßen Drehlager 10 zugeordneten Sicherungselemente 26 in lösbarer Weise mit den als Schrauben 21 ausgebildeten Befestigungselementen an dem Außenlagerring 24 befestigt.

Der Außenlagerring 24 weist einen Ausschnitt 28 auf und ist somit C-förmig ausgebildet. Der Außenlagerring 24 ist so montiert, dass sich der Ausschnitt 28 auf der Unterseite 29 des Drehlagers 10 befindet. Über die scheibenförmigen Sicherungselemente 26 wird der Ausschnitt 28 in dem Außenlagerring 24 überbrückt. Um eine gute Stabilisierung und Überbrückung dieses Ausschnittes 28 durch die Sicherungselemente 26 zu erreichen, sind die als Schrauben 21 ausgebildeten Befestigungselemente und die dem Außenlagerring 24 und die Sicherungselemente 26 angeordneten, als Bohrungen ausgebildeten Durchbrüche 27 für das Durchdringen der als Schrauben 21 ausgebildeten Befestigungselemente in der Nähe des Ausschnittes so angeordnet, dass jeweils in der Nähe des Endes 29 des Ausschnittes 28 sich ein Befestigungselement 21 befindet.

Durch den Ausschnitt 28 in dem Außenlagerring 24 wird erreicht, dass in den Lagerbereich gelangende Verunreinigungen über den Ausschnitt 28 aus der Lagerung heraus gelangen können. Weiterhin wird durch den Ausschnitt 28, der zumindest eine derartige Größe aufweist, dass er über den Trägerbalken 9 zur Montage bzw. Demontage geschoben werden kann, gewährleistet, dass bei montierten Gummilagerungen 11 das Drehlager 10 zumindest für Wartungszwecke auch ohne Demontage der Gummilagerungen 11 zugänglich ist. Dies wird dadurch erreicht, dass die Befestigungselemente 21 weit außen angeordnet, nämlich im Bereich des Außenlagerringes 24 und dem Außenumfang der Sicherungsringe 26. Darüber hinaus baut das erfindungsgemäße Drehlager 10 durch die vorbeschriebene Anordnung der Befestigungselemente 21 sehr platzsparend und so in den Zwischenräumen von sehr engt beieinander liegenden Lagerelementen 11 für die Bodenbearbeitungselemente 13 angeordnet werden.

Um auch die Sicherungsringe 26 austauschen zu können, weisen diese ebenfalls einen Ausschnitt 29 auf. Somit sind also auch die Sicherungsringe C-förmig ausgestaltet. Der Ausschnitt 29 weist zumindest eine derartige Größe auf, dass er über den Trägerbalken 9 zur Montage bzw. Demontage geschoben werden kann.

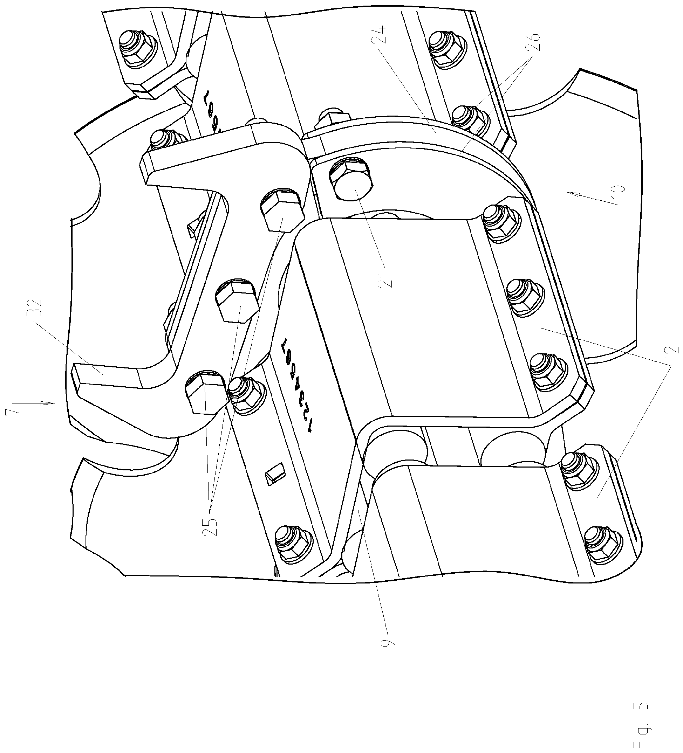

Der Ausschnitt 30 in den Sicherungsringen wird durch ein Zwischeneinsatzelement 31 geschlossen, wie Fig.5 zeigt. Mittels der als Schrauben 25 ausgebildeten Befestigung ist der Außenlagerring 24 an dem Trägerrahmen 7 bzw. dort befestigten Montagestücken 32 angeordnet.

## Patentansprüche

1. Landwirtschaftliches Gerät, insbesondere Bodenbearbeitungsgerät, mit zumindest einem an einem Tragrahmen (7) angeordneten und Bodenbarbeitungswerkzeuge (13) tragenden Trägerbalken (9), wobei die Bodenbarbeitungswerkzeuge (13) mittels Tragarme (11) aufweisenden Halterungen (12) an dem Trägerbalken (9) gefestigt sind, wobei der Trägerbalken (9) mittels zumindest zweier beabstandet zueinander angeordneter Drehlager (10) an dem Tragrahmen (7) angeordnet ist, wobei der Trägerbalken (9) in den Drehlagern (10) um seine Längsachse begrenzt verdrehbar ist, wobei das jeweilige Drehlager (10) einen an dem Trägerbalken (9) befestigten Innenlagerring (23) und einem mit dem Innenlagerring (23) in verdrehbar gelagerter Weise zusammenwirkenden und mit dem Tragrahmen (7) verbundenen Außenlagerring (24) aufweist, wobei dem jeweiligen Drehlager (10) auf jeder Seite ein den Innenlagerring (23) zum Außenlagerring (24) in axialer Richtung zueinander fixierendes Sicherungselement (26) zugeordnet ist, wobei zumindest eines der Sicherungselemente (26) mittels Befestigungselementen (21) mit einem der Lageringe (24) in lösbarer Weise verbunden ist, **dadurch gekennzeichnet, dass** das in lösbarer Weise befestigte Sicherungselement (26) mit den Befestigungselementen (21) an dem Außenlagerring (24) befestigt ist.

2. Landwirtschaftliches Gerät nach Anspruch 1, **dadurch gekennzeichnet, dass** beide der einem Drehlager (10) zugeordneten Sicherungselemente (26) in lösbarer Weise befestigte Sicherungselemente (26) mit den Befestigungselementen (21) an dem Außenlagerring (24) befestigt sind.

3. Landwirtschaftliches Gerät nach zumindest einem der vorstehenden Ansprüche, **dadurch gekennzeichnet, dass** der Außenlagerring (24) einen Ausschnitt (28) aufweist.

4. Landwirtschaftliches Gerät nach Anspruch 3, **dadurch gekennzeichnet, dass** der Außenlagerring (24) C-förmig ausgebildet ist.

5. Landwirtschaftliches Gerät nach Anspruch 3, **dadurch gekennzeichnet, dass** der Ausschnitt (24) sich auf der Unterseite des Drehlagers (10) befindet.

6. Landwirtschaftliches Gerät nach Anspruch 3, **dadurch gekennzeichnet, dass** jeweils in der Nähe des Ausschnittes (28) ein den Außenlagerring (24) mit den Sicherungselementen (26) verbindendes Befestigungselement (21) angeordnet ist.

7. Landwirtschaftliches Gerät nach Anspruch 6, **dadurch gekennzeichnet, dass** die Sicherungselemente (26) den Ausschnitt (28) in dem Außenlagerring (24) überbrückend ausgebildet sind.

## Claims

1. Agricultural device, in particular a soil-working device, having at least one carrier beam (9) which is arranged on a supporting frame (7) and which carries ground-working tools (13), wherein the ground-working tools (13) are fastened to the carrier beam (9) by means of holders (12) having supporting arms (11), wherein the carrier beam (9) is arranged on the supporting frame (7) by means of at least two rotary bearings (10) which are arranged so as to be spaced apart from one another, wherein the carrier beam (9) can be rotated to a limited degree about its longitudinal axis in the rotary bearings (10), wherein the respective rotary bearing (10) has an inner bearing ring (23) fastened to the carrier beam (9) and an outer bearing ring (24) which interacts with the inner bearing ring (23) in a rotatably mounted manner and which is connected to the supporting frame (7), wherein a securing element (26) which fixes the inner bearing ring (23) with respect to the outer bearing ring (24) in the axial direction is assigned to the respective rotary bearing (10) on each side, wherein at least one of the securing elements (26) is connected to one of the bearing rings (24) in a releasable manner by means of fastening elements (21), **characterized in that** the securing element (26) fastened in a releasable manner is fastened to the outer bearing ring (24) by the fastening elements (21).

2. Agricultural device according to Claim 1, **characterized in that** both of the securing elements (26) assigned to a rotary bearing (10) securing elements (26) fastened in a releasable manner are fastened to the outer bearing ring (24) by the fastening elements (21).

3. Agricultural device according to at least one of the preceding claims, **characterized in that** the outer bearing ring (24) has a cutout (28).

4. Agricultural device according to Claim 3, **characterized in that** the outer bearing ring (24) is C-shaped.

5. Agricultural device according to Claim 3, **characterized in that** the cutout (24) is situated on the lower side of the rotary bearing (10).

6. Agricultural device according to Claim 3, **characterized in that** a fastening element (21) which connects the outer bearing ring (24) to the securing elements (26) is arranged in each case in the vicinity of the cutout (28).

7. Agricultural device according to Claim 6, **characterized in that** the securing elements (26) are designed to bridge the cutout (28) in the outer bearing ring (24).

## Revendications

1. Appareil agricole, en particulier appareil de travail du sol, avec au moins une poutre de support (9) disposée sur un cadre de support (7) et portant des outils de travail du sol (13), dans lequel les outils de travail du sol (13) sont fixés à la poutre de support (9) au moyen de supports (12) présentant des bras de support (11), dans lequel la poutre de support (9) est disposée sur le cadre de support (7) au moyen d'au moins deux paliers rotatifs (10) disposés à distance l'un de l'autre, dans lequel la poutre de support (9) peut tourner de façon limitée dans les paliers rotatifs (10) autour de son axe longitudinal, dans lequel le palier rotatif respectif (10) présente une bague de palier intérieure (23) fixée à la poutre de support (9) et une bague de palier extérieure (24) coopérant avec la bague de palier intérieure (23) d'une façon supportée en rotation et assemblée au cadre de support (7), dans lequel un élément de fixation (26) fixant la bague de palier intérieure (23) à la bague de palier extérieure (24) en direction axiale l'une par rapport à l'autre est associé sur chaque côté au palier rotatif respectif (10), dans lequel au moins un des éléments de fixation (26) est attaché de façon séparable à une des bagues de palier (24) au moyen d'éléments de fixation (21), **caractérisé en ce que** l'élément de fixation (26) fixé de façon amovible est fixé à la bague de palier extérieure (24) avec les éléments de fixation (21).

2. Appareil agricole selon la revendication 1, **caractérisé en ce que** les deux éléments de fixation (26) associés à un palier rotatif (10) des éléments de fixation (26) fixés de manière séparable sont fixés à la bague de palier extérieure (24) avec les éléments de fixation (21).

3. Appareil agricole selon au moins une des revendications précédentes, **caractérisé en ce que** la bague de palier extérieure (24) présente une découpe (28).

4. Appareil agricole selon la revendication 3, **caractérisé en ce que** la bague de palier extérieure (24) est réalisée en forme de C.

5. Appareil agricole selon la revendication 3, **caractérisé en ce que** la découpe (24) se trouve sur le côté inférieur du palier rotatif (10).

6. Appareil agricole selon la revendication 3, **caractérisé en ce qu'**un élément de fixation (21) reliant la bague de palier extérieure (24) aux éléments de fixation (26) est disposé à proximité de la découpe (28).

7. Appareil agricole selon la revendication 6, **caractérisé en ce que** les éléments de fixation (26) sont réalisés de façon à enjamber la découpe (28) dans la bague de palier extérieure (24).
